# FASCICULE DE BREVET EUROPEEN

(11) **EP 2 598 738 B1**
(45) Date de publication et mention de la délivrance du brevet: **25.04.2018**
(21) Numéro de dépôt: 11741674.3
(22) Date de dépôt: 15.07.2011
(51) Int. Cl.: F02C 7/20, B64D 27/26

(54) **TURBOREACTEUR LATERAL PERFECTIONNE POUR LIMITER SES DEFORMATIONS**
SEITLICH MONTIERTES TURBOSTRAHLTRIEBWERK MIT VERMINDERTER VERFORMUNGSNEIGUNG
LATERAL TURBOJET IMPROVED FOR LESS DEFORMATION THEREOF

(30) Priorité: 30.07.2010 FR 1056337
(43) Date de publication de la demande: 05.06.2013
(73) Titulaire: Snecma, 75015 Paris (FR)
(72) Inventeur: BELLABAL, François, Robert, F-77300 Fontainebleau (FR)
(74) Mandataire: Duflos, Bertrand Guillaume
(86) Numéro de dépôt international: PCT/FR2011/051693
(87) Numéro de publication internationale: WO 2012/013889

(56) Documents cités:
- EP-A1- 0 028 970
- FR-A1- 2 928 180
- FR-A1- 2 940 359
- GB-A- 2 021 696
- US-A- 4 428 189

## Description

L'invention se rapporte à un turboréacteur double flux rattaché latéralement à un fuselage. Elle concerne plus particulièrement un perfectionnement de la liaison entre le carter intermédiaire et la structure primaire portant la chambre de propulsion, les compresseurs et les turbines, dans le but de limiter la déformation de l'ensemble du turboréacteur sous l'effet, principalement, de la poussée qu'il génère et éventuellement des contraintes thermiques. La performance du turboréacteur s'en trouve améliorée.

Dans un avion équipé de turboréacteurs latéraux, chaque turboréacteur est rattaché au fuselage par deux suspensions, espacées longitudinalement, une suspension avant attachant la virole externe de carter intermédiaire au fuselage et une suspension arrière rattachant l'arrière de la structure primaire de propulsion au même fuselage. Cette structure primaire est elle-même rattachée à la virole externe de carter intermédiaire par des bras radiaux.

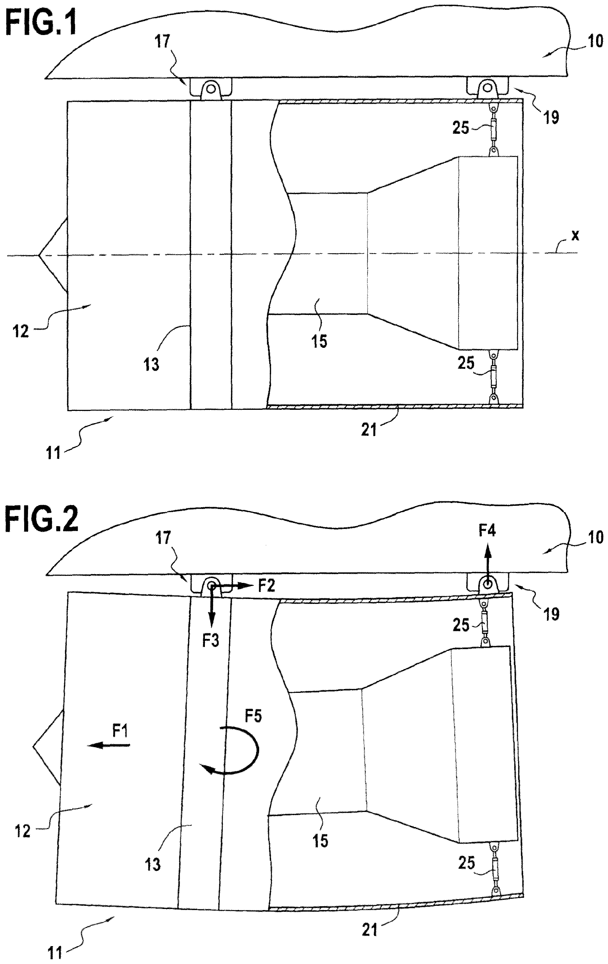

La figure 1 ilfustre schématiquement ce type de montage. On distingue le fuselage 10 de l'avion portant un turboréacteur 11. Ce dernier comprend la soufflante 12 avec la virole externe de carter intermédiaire 13, le carter de la structure primaire 15, la suspension avant 17 et la suspension arrière 19. Cette dernière se rattache à un carénage arrière de soufflante, rigide, plus connu sous l'abréviation "OFD" 21 (pour "Outer Fan Duct" en anglais) qui canalise le flux secondaire et s'étend jusqu'à la virole externe de carter intermédiaire 13 à laquelle il est fixé. Par ailleurs, l'arrière de I"'OFD" 21 est rattaché à l'arrière de la structure primaire 15 par des bielles 25 s'étendant radialement au travers de I"'OFD".

Sur la figure 2, les flèches F1-F4 représentent les différents efforts générés sous l'effet de la poussée axiale du moteur. On note en particulier un bras de levier entre l'axe d'application de la poussée (F1) du turboréacteur et les points d'accrochage de la suspension avant 17. Cette configuration est responsable d'un phénomène de déformation dit de "mise en banane" de l'ensemble du turboréacteur, comme illustré schématiquement. Les contraintes d'origine thermique augmentent généralement ce phénomène. La flèche courbe F5 symbolise le moment de flexion généré sur le turboréacteur qui entraîne sa déformation dite "en banane". On y remédie généralement en renforçant la rigidité de I"'OFD", ce qui permet d'obtenir de bonnes performances de "contournement" aux extrémités des aubes des rotors. Cependant, une trop grande rigidité de I"'OFD" se traduit par un alourdissement de la structure et surtout par des charges très importantes en cas de perte d'aube.

L'invention vise à remédier à tous ces problèmes.

Un turboréacteur à double flux, destiné à être rattaché au fuselage d'un avion, est connu du document FR 2 928 180.

L'invention concerne un turboréacteur à double flux, selon la revendication 1, destiné à être rattaché latéralement au fuselage d'un avion par deux suspensions espacées longitudinalement, une suspension avant et une suspension arrière, chaque turboréacteur étant du type comprenant une virole externe de carter intermédiaire rattachée à ladite suspension avant et une structure primaire de propulsion rattachée à ladite suspension arrière, ladite virole externe de carter intermédiaire et ladite structure primaire étant maintenues en relation coaxiale par un ensemble de bras, chaque bras comprenant une section droite creuse et étant fixé par ses extrémités à ladite virole et à ladite structure primaire, caractérisé en ce qu'au moins certains bras sont conformés et/ou disposés pour se déformer en réponse à la poussée du turboréacteur par création entre ladite virole et ladite structure primaire, d'un couple déformant de direction opposée à la sollicitation qui est générée sous l'effet de la même poussée du turboréacteur par le bras de levier entre l'axe de poussée et ladite suspension avant.

La structure primaire est rattachée à la suspension arrière soit directement soit par l'intermédiaire de l'OFD.

Selon certains modes de réalisation, un tel bras est agencé pour réaliser un couplage entre cisaillement et torsion en sorte que le centre de torsion d'une section droite dudit bras se trouve situé à l'extérieur d'un plan médian dudit bras, du côté opposé à ladite suspension avant par rapport audit plan médian. Une définition dudit "centre de torsion" sera donnée ci-dessous.

Plus précisément, un tel bras peut être ouvert ou comporter une fente s'étendant de la virole jusqu'à la structure primaire, latéralement.

Selon un autre mode de réalisation, un tel bras a une section droite asymétrique. Par exemple, cette section peut être approximativement trapézoïdale. Dans ce cas, il est avantageux que le bras soit complété par un carénage améliorant son aérodynamisme.

Selon un autre mode de réalisation possible, certains bras d'un tel turboréacteur s'étendent radialement dans le prolongement de points d'attache de ladite suspension avant tandis que les autres s'étendent parallèlement à une direction radiale correspondante, de l'autre côté de cette direction radiale par rapport auxdits points d'attache.

L'invention sera mieux comprise et d'autres avantages de celle-ci apparaîtront plus clairement à la lumière de la description qui va suivre de plusieurs modes de réalisation conformes à son principe, donnée uniquement à titre d'exemples et faite en référence aux dessins annexés, dans lesquels :
- les figures 1 et 2 sont des vues schématiques illustrant l'art antérieur et ses problèmes, déjà évoqués ;
- la figure 3 illustre le montage entre la virole externe du carter intermédiaire et des éléments fixes de la structure primaire du turboréacteur, conformément à l'invention ;
- la figure 4 illustre schématiquement le rattachement de la virole extérieure au fuselage de l'avion ;
- la figure 5 est une section droite d'un bras de la figure 3 ;
- la figure 6 illustre en section droite analogue à la figure 5, une variante du bras ; et
- la figure 7 est une vue analogue à la figure 4 illustrant encore une variante.

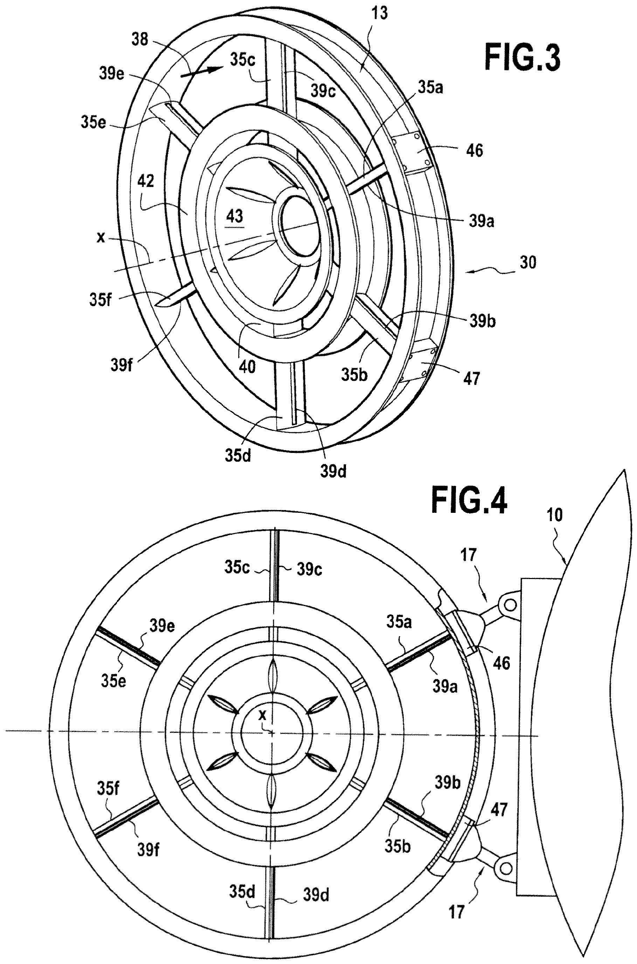

En considérant plus particulièrement les figures 3 à 5, on a représenté une partie structurale fixe 30 d'un turboréacteur, rattachée au fuselage 10 et se situant au voisinage de la partie arrière du carter intermédiaire. Cette partie structurale admet un axe X. La poussée du turboréacteur s'exerce selon l'axe X. On distingue plus particulièrement le rattachement de la virole externe de carter intermédiaire 13 au fuselage, par l'intermédiaire de la suspension avant 17. La virole externe de carter intermédiaire est munie de bras radiaux 35a-35f (six bras régulièrement répartis circonférentiellement, selon l'exemple) s'étendant principalement dans la veine 38 du flux secondaire froid et se prolongeant aussi dans l'espace interveine 40 défini entre le carter interveine 42 et le moyeu 43 servant de support à la partie avant du turboréacteur. L'ensemble du carter interveine 42 et du moyeu 43 font partie de la "structure primaire" 15 du turboréacteur. La virole externe de carter intermédiaire13 comporte deux platines de raccordement 46, 47 à une suspension avant, pour la fixation le long du fuselage de l'avion. Ces deux platines sont dans le prolongement de deux bras radiaux 35a, 35b, adjacents.

Du point de vue mécanique, les bras 35a-35f peuvent être considérés comme des "poutres" encastrées dans la virole 13. Chaque bras a une section droite creuse, en amande, symétrique par rapport à son plan médian P contenant l'axe X.

Selon l'invention, au moins certains bras sont conformés et/ou disposés pour se déformer, en réponse à la poussée du turboréacteur, notamment, par création entre ladite virole externe 13 et ladite structure primaire 15, d'un couple déformant, de direction opposée à la sollicitation qui est générée sous l'effet de la même poussée du turboréacteur par le bras de levier entre l'axe moteur et ladite suspension avant, représentée par la flèche courbe F5 sur la figure 2.

Dans l'exemple décrit, on définit comme étant le centre de torsion 0 dans une section droite d'un bras 35a-35f, le point où aucun moment n'est généré lorsqu'on applique un effort suivant la direction de l'axe moteur X. Cet effort est généré par la poussée du turboréacteur lui-même.

Classiquement, la section droite symétrique d'un tel bras est fermée de sorte que le centre de torsion se trouve au centre de cette section droite fermée.

Pour l'exemple défini ci-dessus, l'invention peut aussi se caractériser en ce qu'un tel bras 35a-35f est agencé pour réaliser un couplage entre cisaillement et torsion en sorte que le centre de torsion O d'une section droite du bras se situe à l'extérieur du plan médian P dudit bras, du côté opposé à ladite suspension avant par rapport à la suspension avant 17, par rapport à ce même plan médian, contenant l'axe radial Y passant au milieu du bras.

Pour décaler dans le sens souhaité, le centre de torsion 0 vers l'extérieur, selon la figure 3, il suffit, sans nécessairement changer la forme de la section, qu'un tel bras comporte une fente 39a-39f s'étendant de la virole jusqu'à la structure primaire, sur une face de celui-ci. En d'autres termes, le bras a une section droite en C plus ou moins fermé, pour définir ladite fente.

Il est intéressant de constater que, pour obtenir la sollicitation en déformation capable de s'opposer au mieux à l'effort tendant à provoquer la déformation dite "en banane" de l'ensemble du turboréacteur entre ses points d'attache 17, 19, on exploite les mêmes causes à l'origine d'une telle déformation, à savoir la poussée du turboréacteur et les contraintes thermiques.

La fente latérale 39 (de préférence pour n'importe quel bras) est pratiquée sur une face 49 du bras dans un plan tangent à cette face qui est sensiblement parallèle au plan radial P du bras contenant l'axe X du turboréacteur et de façon que cette face ouverte, contenant la fente 39, soit orientée approximativement vers le fuselage, c'est-à-dire vers l'attache avant.

A titre d'exemple, on constate sur la figure 3 que les fentes 39a, 39b des bras 35a, 35b rattachés à la suspension 17 s'ouvrent en regard l'une de l'autre tandis que celles des bras 35e, 35f radialement dans le prolongement de ceux-ci s'ouvrent sur leurs faces opposées à celles qui sont en regard l'une de l'autre, circonférentiellement. Les fentes 39c, 39d des bras 35c, 35d s'ouvrent aussi dans la direction de l'attache 17. L'ensemble des efforts de déformation sur les bras contribue à compenser les efforts qui tendraient à provoquer la déformation "en banane" du turboréacteur.

Comme représenté, la fente 39a-39f de chaque bras est refermée par un joint élastomère 51 ou analogue, sans rôle mécanique mais évitant que la présence de la fente ne perturbe l'écoulement.

Les fentes peuvent aussi s'étendre sur les prolongements des bras situés entre le carter interveine 42 et le moyeu 43.

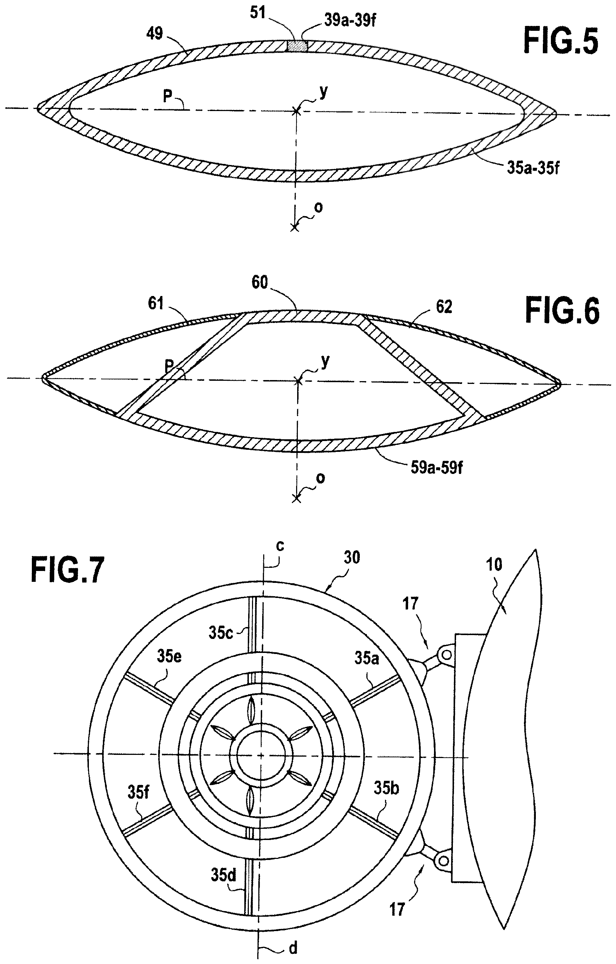

Une autre façon d'obtenir un résultat comparable est de donner à un tel bras 59a-59f une section droite asymétrique. Par exemple, selon la figure 6, cette section est approximativement trapézoïdale. Dans ce cas, la face 60 définissant le petit côté du trapèze remplace la face munie de la fente. Autrement dit, en référence à la figure 3, les sections trapézoïdales seraient réparties de façon analogue, c'est-à-dire avec les petites faces étroites des bras à la place des faces fendues.

Avantageusement, dans ce cas, un tel bras asymétrique est complété par un carénage 61, 62 lui donnant par exemple une section en amande, symétrique, améliorant son aérodynamisme. Ce carénage n'est pas en soi suffisamment rigide pour avoir une influence sur la position du centre de torsion O.

Selon une autre possibilité illustrée à la figure 7, certains bras 35c, 35d sont décalés par rapport à leur position habituelle, strictement radiale. Dans l'exemple, on voit que chacun de ces bras s'étend parallèlement à une direction radiale c, d correspondante (celle qu'il occupe sur la figure 3) de l'autre côté de cette direction radiale par rapport aux points d'attache de la suspension avant 17. En revanche, les bras 35a, 35b, 35e, 35f qui s'étendent radialement par rapport à ces points d'attache ne sont pas décalés.

Dans cette variante, les bras peuvent avoir une section droite symétrique et fermée. Néanmoins, toutes les solutions proposées ci-dessus peuvent être combinées entre elles, c'est-à-dire que des bras de types différents peuvent s'étendre entre la virole externe de carter intermédiaire et la structure primaire.

## Revendications

1. Turboréacteur à double flux, apte à être rattaché latéralement au fuselage d'un avion par deux suspensions espacées longitudinalement, une suspension avant (17) et une suspension arrière (19), ledit turboréacteur comprenant une virole externe de carter intermédiaire (13) apte à être rattachée à ladite suspension avant (17), une structure primaire de propulsion (15) apte à être rattachée à ladite suspension arrière (19), et un ensemble de bras (35a - 35f), ladite virole externe de carter intermédiaire et ladite structure primaire étant maintenues en relation coaxiale par l' ensemble de bras (35a-35f), chaque bras comprenant une section droite creuse et étant fixé par ses extrémités à ladite virole et à ladite structure primaire, **caractérisé en ce qu'**au moins certains bras sont conformés et/ou disposés pour se déformer en réponse à la poussée du turboréacteur par création entre ladite virole (13) et ladite structure primaire (15), d'un couple déformant de direction opposée à la sollicitation qui est générée sous l'effet de la même poussée du turboréacteur par le bras de levier entre l'axe de poussée et ladite suspension avant.

2. Turboréacteur selon la revendication 1, **caractérisé en ce qu'**un tel bras (35a-35f) est agencé pour réaliser un couplage entre cisaillement et torsion en sorte que le centre de torsion (0) d'une section droite dudit bras se trouve situé à l'extérieur d'un plan médian (P) de ce bras, du côté opposé à ladite suspension avant (17) par rapport à ce même plan médian.

3. Turboréacteur selon la revendication 1 ou 2, **caractérisé en ce qu'**un tel bras comporte une fente (39e-39f) s'étendant de ladite virole jusqu'à la structure primaire.

4. Turboréacteur selon la revendication 3, **caractérisé en ce que** cette fente est refermée par un joint élastomère (51) ou analogue.

5. Turboréacteur selon l'une des revendications précédentes, **caractérisé en ce qu'**un tel bras (59a-59f) a une section droite asymétrique.

6. Turboréacteur selon la revendication 5, **caractérisé en ce que** cette section est approximativement trapézoïdale.

7. Turboréacteur selon la revendication 5 ou 6, **caractérisé en ce que** ledit bras est complété par un carénage (61, 62) améliorant son aérodynamisme.

8. Turboréacteur selon l'une des revendications 1 à 7, **caractérisé en ce que** certains bras s'étendent radialement dans le prolongement de points d'attache de ladite suspension avant (17) et **en ce que** les autres (35c, 35d) s'étendent parallèlement à une direction radiale (c, d) correspondante, de l'autre côté de cette direction radiale par rapport auxdits points d'attache.

## Patentansprüche

1. Zweistrom-Turbinentriebwerk, das seitlich am Rumpf eines Flugzeugs durch zwei in Längsrichtung angeordnete Aufhängungen, eine vordere Aufhängung (17) und eine hintere Aufhängung (19), befestigt werden kann, wobei das Turbinentriebwerk einen äußeren Ring eines Zwischengehäuses (13), der an der vorderen Aufhängung (17) befestigt werden kann, eine primäre Antriebsstruktur (15), die an der hinteren Aufhängung (19) befestigt werden kann, und eine Armanordnung (35a - 35f) aufweist, wobei der äußere Ring eines Zwischengehäuses und die primäre Struktur in koaxialer Beziehung durch die Armanordnung (35a-35f) gehalten werden, wobei jeder Arm einen hohlen geraden Abschnitt aufweist und durch seine Enden an dem Ring und an der primären Struktur befestigt ist, **dadurch gekennzeichnet, dass** mindestens einige Arme ausgebildet und/oder angeordnet sind, um sich in Reaktion auf den Schub des Turbinentriebwerks zu verformen, indem zwischen dem Ring (13) und der primären Struktur (15) ein Verformungsmoment in einer Richtung erzeugt wird, die der Belastung entgegengesetzt ist, die durch denselben Schub des Turbinentriebwerks durch den Hebelarm zwischen der Schubachse und der vorderen Aufhängung erzeugt wird.

2. Turbinentriebwerk gemäß Anspruch 1, **dadurch gekennzeichnet, dass** ein solcher Arm (35a - 35f) so angeordnet ist, dass er eine Kopplung zwischen Scherung und Torsion bildet, sodass sich das Torsionszentrum (O) eines geraden Abschnitts des Arms außerhalb einer mittleren Ebene (P) des Arms auf der gegenüberliegenden Seite der vorderen Aufhängung (17) in Bezug auf die mittlere Ebene befindet.

3. Turbinentriebwerk gemäß Anspruch 1 oder 2, **dadurch gekennzeichnet, dass** ein solcher Arm einen Schlitz (39e - 39f) aufweist, der sich von dem Ring bis zur primären Struktur erstreckt.

4. Turbinentriebwerk gemäß Anspruch 3, **dadurch gekennzeichnet, dass** dieser Schlitz durch eine elastomere Dichtung (51) oder eine ähnliche Dichtung verschlossen ist.

5. Turbinentriebwerk gemäß einem der vorangehenden Ansprüche, **dadurch gekennzeichnet, dass** ein solcher Arm (59a - 59f) einen asymmetrischen geraden Abschnitt aufweist.

6. Turbinentriebwerk gemäß Anspruch 5, **dadurch gekennzeichnet, dass** dieser Abschnitt annähernd trapezförmig ist.

7. Turbinentriebwerk gemäß Anspruch 5 oder 6, **dadurch gekennzeichnet, dass** der Arm durch eine Verkleidung (61, 62) ergänzt ist, die seine Aerodynamik verbessert.

8. Turbinentriebwerk gemäß einem der Ansprüche 1 bis 7, **dadurch gekennzeichnet, dass** einige Arme sich radial in Verlängerung der Befestigungspunkte der vorderen Aufhängung (17) erstrecken und dass sich die anderen (35c, 35d) parallel zu einer entsprechenden radialen Richtung (c, d) auf der anderen Seite dieser radialen Richtung in Bezug auf die Befestigungspunkte erstrecken.

## Claims

1. A two-stream turbojet for attaching laterally to the fuselage of an airplane via two longitudinally spaced apart suspensions comprising a front suspension (17) and a rear suspension (19), said turbojet comprising an intermediate casing outer shroud (13) suitable for being attached to said front suspension (17), a propulsion primary structure (15) suitable for being attached to said rear suspension (19), and a set of arms (35a-35f), said intermediate casing outer shroud and said primary structure being held in a coaxial relationship by the set of arms (35a-35f), each arm having a right section that is hollow and being fastened by its ends to said shroud and to said primary structure, the turbojet being **characterized in that** at least some of the arms are shaped and/or arranged so as to deform in response to the thrust from the turbojet by creating a deforming torque between said shroud (13) and said primary structure (15), the deforming torque having a direction opposite to the stress that is generated under the effect of the same turbojet thrust by the lever arm between the thrust axis and said front suspension.

2. A turbojet according to claim 1, **characterized in that** such an arm (35a-35f) is arranged to provide coupling between shear and twisting so that the center of torsion (0) of a right section of said arm is situated outside a midplane (P) of the arm, on the side opposite from said front suspension (17) relative to said midplane.

3. A turbojet according to claim 1 or claim 2, **characterized in that** such an arm includes a slot (39e-39f) extending from said shroud to the primary structure.

4. A turbojet according to claim 3, **characterized in that** the slot is closed by an elastomer seal (51) or the like.

5. A turbojet according to any preceding claim, **characterized in that** such an arm (59a-59f) has a right section that is asymmetrical.

6. A turbojet according to claim 5, **characterized in that** said section is approximately trapezoidal.

7. A turbojet according to claim 5 or claim 6, **characterized in that** said arm is associated with a fairing (61, 62) for improving its streamlining.

8. A turbojet according to any one of claims 1 to 7, **characterized in that** certain arms extend radially in line with attachment points of said front suspension (17), and **in that** the other arms (35c, 35d) extend parallel to a corresponding radial direction (c, d) on the other side of this radial direction relative to said attachment points.
